**Europäisches Patentamt**

**European Patent Office**

**Office européen des brevets**

(19)

(11) Veröffentlichungsnummer: **0 014 234**

**A1**

(12) ## EUROPÄISCHE PATENTANMELDUNG

(21) Anmeldenummer: **79104466.2**

(22) Anmeldetag: **13.11.79**

(51) Int. Cl.³: **A 01 D 69/00**
**A 01 D 33/12**

(30) Priorität: **16.11.78 DE 2849658**

(43) Veröffentlichungstag der Anmeldung:
**20.08.80 Patentblatt 80 17**

(84) Benannte Vertragsstaaten:
**BE FR NL**

(71) Anmelder: **Franz Kleine Maschinenfabrik GmbH & Co.**

**D-4796 Salzkotten(DE)**

(72) Erfinder: **Powilleit, Hansherger, Dipl.-Ing.**
**Am Hohlen Berg 4**
**D-4000 Düsseldorf 22(DE)**

(74) Vertreter: **Bibrach, Rudolf, Dipl.-Ing. et al,**
**Patentanwälte Dipl.-Ing. R. Bibrach Dipl.-Ing. E. Rehberg**
**Postfach 7 38**
**D-3400 Göttingen(DE)**

(54) **Proportionaler Antrieb der Werkzeuge einer landwirtschaftlichen Maschine.**

(57)   Bei landwirtschaftlichen Maschinen ist es in vielen Fällen erforderlich, die Pflanz-, Bearbeitungs- und oder Erntewerkzeuge synchron mit der Fahrgeschwindigkeit der Maschine bzw. mit einem prozentualen Vor oder Nachlauf zu der Fahrgeschwindigkeit der Maschine anzutreiben.

   Bei dieser landwirtschaftlichen Maschine besteht die Aufgabe, unter Verwendung eines auf dem Erdboden ablaufenden nicht angetriebenen Rades eine Steuervorrichtung zu schaffen, die in weiten Grenzen jede gewünschte Geschwindigkeit- bzw. Wegzuordnu g - bei Beibehaltung der linearen Abhängigkeit von der Fahrgeschwindigkeit - zwischen Fahrgeschwindigkeit bzw. Fahrweg und Drehgeschwindigkeit bzw. Weg des Arbeitswerkzeuges gestattet. Zur Lösung dieser Aufgabe ist ein erster mit dem ablaufenden Rad getrieblich verbundener induktiver Geber (16) zur Erzeugung eines weg- bzw. geschwindigkeitsabhängigen Signals und ein zweiter, mit dem Bearbeitungswerkzeug getrieblich verbundener induktiver Geber (17) zur Erzeugung eines dem Weg bzw. der Geschwindigkeit des Bearbeitungswerkzeuges entsprechenden Signals vorgesehen. Eine Elektronik (18) dient dem Vergleich der beiden Signale und der Eingabe von zusätzlichen Korrektursignalen. Es werden also nur noch die

Signale behandelt und gehandhabt, was mit Hilfe einer Elektronik sehr leicht durchführbar ist. Der Antrieb der Bearbeitungswerkzeuge wird dann über eine Stelleinrichtung entsprechend variiert.

Fig. 2

- 1 -

Landwirtschaftliche Maschine

Die Erfindung bezeiht sich auf eine landwirtschaftliche Maschine mit angetriebenen Pflanz-,
Bearbeitungs- und/oder Erntewerkzeugen und mit
mindestens einem auf den Erdboden ablaufenden,
bevorzugt nicht angetriebenen Rad.

Bei landwirtschaftlichen Maschinen ist es in
vielen Fällen erforderlich, die Pflanz-, Bearbeitungs- und/oder Erntewerkzeuge synchron mit der
Fahrgeschwindigkeit der Maschine bzw. mit einem
prozentualen Vor- oder Nachlauf zu der Fahrgeschwindigkeit der Maschine anzutreiben. In manchen
Fällen, insbesondere bei Pflanz- oder Sämaschinen
ist es erforderlich, eine wegabhängige Steuerung zu
erzielen. Man hat bereits versucht, den Antrieb der
Werkzeuge einer landwirtschaftlichen Maschine mit
dem Maschinenantrieb, z.B. einen Zapfwellenantrieb
bei fest vorgegebener Fahrgeschwindigkeit, zu koppeln
oder mitlaufende Räder anzuordnen, von welchen ein
indirekter Antrieb mechanisch oder getriebliche
Mittel übertragen wird. In vielen Fällen reicht dies
aus. Oftmals aber werden ungünstige Ergebnisse erzielt, weil bei einem Antrieb der Werkzeuge vom
Fahrantrieb her der Schlupf der Räder auf dem Boden
nicht zu berücksichtigen war oder weil bei einer Ableitung der Antriebskräfte von einem auf den Boden
ablaufenden nicht angetriebenen Rad dieses durch die
Antriebskräfte so gehemmt wurde, daß ein Schlupf
zwischen Rad und Boden auftrat.

Die DE-AS 21 37 414 zeigt eine landwirtschftliche
Maschine der eingangs beschriebenen Art, bei der
eine Stellvorrichtung, die aus einer Meßpumpe und
einer Steuereinheit besteht, von dem mitlaufenden
Rad angetrieben wird. Der Druckölstrom der Maschine
wird in der Meßpumpe aufgeteilt. Der abgeteilte
Ölstrom wird einem Hydromotor zugeteilt, der die
Erntewerkzeuge antreibt. Bei einer konkreten Ausführungsform, wenn also die Dosierpumpe ihrer Art
und Größe nach festliegt, ist damit immer eine eindeutige, nicht veränderbare Zuordnung zwischen Fahrweg und ausgesteuerter Ölmenge bzw. Drehzahl der
Arbeitswerkzeuge gegeben. Eine Anpassung an
wechselnde Bedingungen ist nicht vorgesehen. Weiterhin ist nachteilig, daß die Stellvorrichtung immer
mit Ölüberschuß arbeitet, d.h. es treten starke
Energieverluste bei gleichzeitiger Ölerwärmung ein.

Der Erfindung liegt die Aufgabe zugrunde, eine landwirtschaftliche Maschine der eingangs beschriebenen
Art mit einer Steuereinrichtung zu versehen, die in
weiten Grenzen jede gewünschte Geschwindigkeit bzw.
Wegzuordnung - bei Beibehaltung der linearen Abhängigkeit von der Fahrgeschwindigkeit - zwischen
Fahrgeschwindigkeit bzw. Fahrweg und Drehgeschwindigkeit
bzw. Weg des Arbeitswerkzeuges gestattet.

Erfindungsgemäß wird dies dadurch erreicht, daß ein
erster mit dem ablaufenden Rad getrieblich verbundener
induktiver Geber zur Erzeugung eines weg- bzw.
geschwindigkeitsabhängigen Signals und ein zweiter mit
dem Bearbeitungswerkzeug getrieblich verbundener
induktiver Geber zur Erzeugung eines dem Weg bzw. der Geschwindigkeit des Bearbeitungswerkzeuges entsprechenden Signals vorgesehen sind, daß zum Vergleich der beiden Signale und zur Einspeisung
von Korrektursignalen eine Elektronik vorgesehen
ist und daß für die Steuerung des Antriebes der
Bearbeitungswerkezuge eine das Ergebnissignal aus
der Elektronik aufnehmende Stelleinrichtung im
Antrieb der Bearbeitungswerkezuge angeordnet ist.
Es werden also nur noch die Signale gehandhabt,
in dem ein Signalvergleich in der Elektronik durchgeführt wird. Der Antrieb der Arbeitswerkzeuge
wird über die Stelleinrichtung entsprechend variiert,
so daß nicht mehr mit Leistungsüberschuß gearbeitet
werden muß. Weiterhin kann durch die Eingabe von
Korrektursignalen in die Elektronik in einfacher
Weise der Vor- bzw. Nachlauf verändert bzw. neu eingestellt werden, wobei trotzdem die lineare Abhängigkeit von der Fahrgeschwindigkeit bzw. dem
Fahrweg beibehalten nleibt, weil das Signal des
ersten Gebers diese Abhängigkeit einbringt.

Die beiden Geber können als Spannungsgeneratoren oder
als induktive Weggeber ausgebildet sein. Da in der
Landtechnik häufig niedrige Drehzahlen und Fahrgeschwindigkeiten verwendet werden, erscheinen
induktive Geber besonders geeignet, die eine gleichmäßige Folge von Impulsen anstelle eines in der
Stärke oder Frequenz veränderten Signals senden.

Die Elektronik kann zur stufenlosen Verstellung bzw.
Einstellung der Korrektursignale ausgebildet sein,
so daß damit in weiten Grenzen eine Anpassung an
variable Arbeitsbedingungen möglich ist.

0014234

- 4 -

Auch die Stelleinrichtung ist stufenlos ausgebildet.
Sie kann ein Getriebe sein, eine Regelpumpe oder ein
elektrischer Regelmotor. In all diesen Fällen muß
es mit der Stelleinrichtung möglich sein, stufenlos steuernd in den Antrieb der Arbeitswerkzeuge
einzugreifen, um den Antrieb an den Arbeitswerkzeugen
so zu verändern, daß das Signal des zweiten Gebers
den gewünschten Wert einnimmt.

Die Elektronik kann im Bereich des Bedienungsplatzes
der landwirtschaftlichen Maschine angeordnet sein.
Elektrische Signale lassen sich wesentlich leichter
handhaben als hydraulische Signale, wie sie im Stand
der Technik beschrieben sind.

Die Erfindung wird anhand eines Ausführungsbeispieles
weiter beschrieben. Es zeigen:

    Fig. 1       eine Darstellung einer landwirtschaftlichen Maschine am Beispiel
                   einer Rübenerntemaschine und

    Fig. 2       die schematische Kopplung der beiden
                   induktiven Geber.

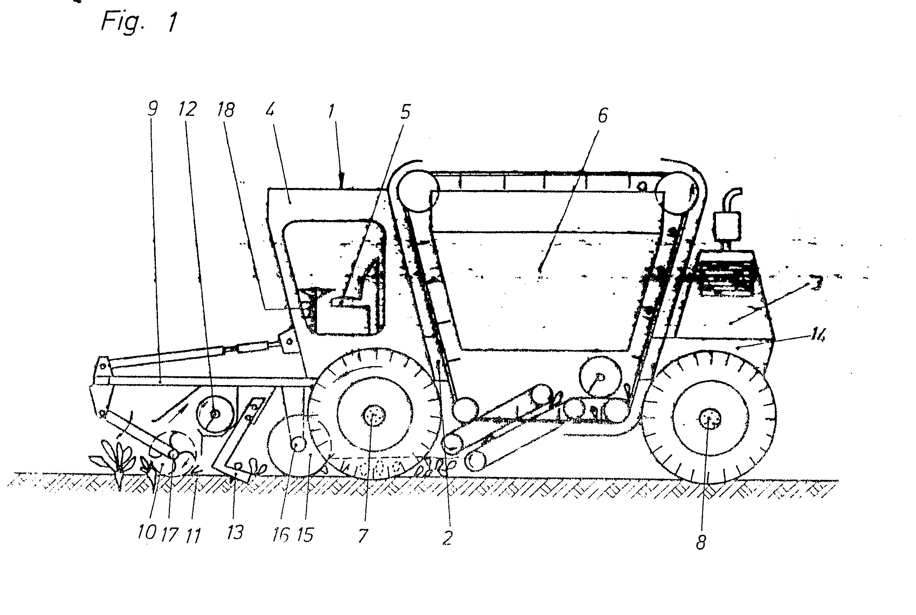

Die in Fig. 1 dargestellte landwirtschaftliche Maschine
1 besitzt in bekannter Weise ein Fahrgestell 2, auf dem
ein Motor 3, eine Fahrerkabine 4 mit Bedienungsplatz 5
sowie ein Rübensammelbunker 6 angeordnet sind. Das
Fahrgestell 2 weist die angetriebenen Achsen 7 und 8
auf. An einem Anbaurahmen 9 sind Bearbeitungswerkzeuge
angeordnet, die im einzelnen aus einem Tastrad 10, einer

- 5 -

Köpfeinrichtung 11, einer Querfördereinrichtung 12
und einem Rodeschar 13 bestehen. Köpfeinrichtung 11
und Rodeschar 13 sind ortsfest angeordnet, während
das Tastrad 10 und die Querfördereinrichtung 12 angetrieben werden, und zwar über einen nicht dargestellten Antrieb von dem Motor 3 aus. In dem Antrieb
ist ein stufenloses Getriebe 14 vorgesehen, welches
an geeigneter Stelle der landwirtschaftlichen Maschine
1 angeordnet ist.

Weiterhin ist auf dem Erdboden ablaufend ein nicht
angetriebenes Rad 15 vorgesehen, welches getrieblich
mit einem induktiven Geber 16 verbunden ist, der ein
weg- bzw. geschwindigkeitsabhängiges Signal erzeugt.
Ebenso steht mit dem Tastrad 10 ein weiterer induktiver
Geber 17 in getrieblicher Verbindung, der ein dem Weg
bzw. der Geschwindigkeit des Bearbeitungswerkzeuges 1
entsprechendes Signal abgibt.

Zur Verarbeitung dieser beiden Signale und zur Einspeisung von Korrektursignalen ist in der Fahrerkabine
4 in der Nähe des Bedienungsplatzes 5 eine Elektronik
18 angeordnet. Diese Elektronik 18 erlaubt die Verarbeitung der beiden Signale unter Einspeisung eines
Korrektursignals, falls dies erforderlich ist. Das
Ergebnissignal aus dieser Elektronik 18 dient zur
Variation des Antriebes, greift also beispielsweise an
dem stufenlosen Getriebe 14 an, über welches das Bearbeitungswerkzeug 10 angetrieben wird. Der Antrieb des
Bearbeitungswerkzeuges 10 kann auf vielfache Weise
realisiert werden, beispielsweise mechanisch,
hydraulisch oder elektrisch. Dementsprechend sind dann die erforderlichen Aggregate angeordnet. Wesentlich ist immer, daß eine Stelleinrichtung, z.B. in Form des stufenlosen Getriebes 14 vorgesehen ist, so daß der Antrieb der Bearbeitungswerkzeuge 10 stufenlos gesteuert werden kann.

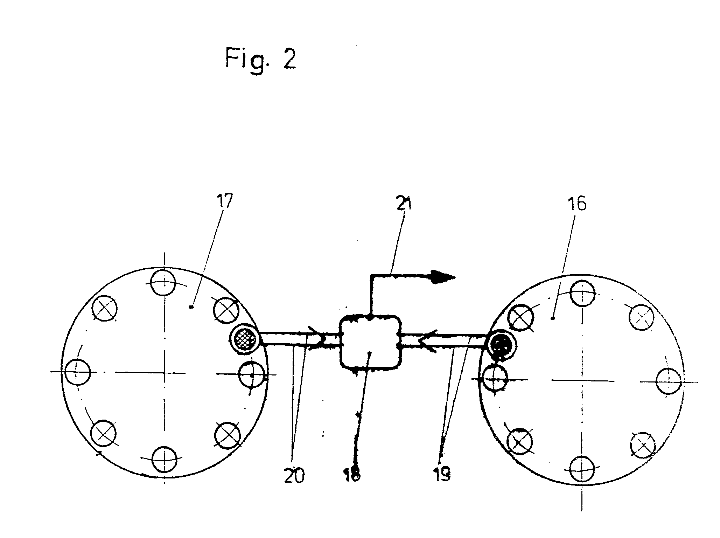

Fig. 2 zeigt noch einmal in schematischer Weise die Verbindung der beiden induktiven Geber 16 und 17 an dem Rad 15 bzw. dem Bearbeitungswerkzeug 10. Von beiden Gebern 16, 17 führen elektrische Leitungen 19, 20 zu der Elektronik 18. Über die Leitung 21 wird das Ergebnissignal zu der Stelleinrichtung, beispielsweise zu dem stufenlosen Getriebe 14, ausgesteuert.

- 1 -

Patentansprüche:

1. Landwirtschaftliche Maschine mit angetriebenen Pflanz-, Bearbeitungs- und/oder Erntewerkzeugen und mit mindestens einem auf dem Erdboden ablaufenden, bevorzugt nicht angetriebenen Rad, dadurch gekennzeichnet, daß ein erster mit dem ablaufenden Rad (15) getrieblich verbundener induktiver Geber (16) zur Erzeugung eines weg- bzw. geschwindigkeitsabhängigen Signals und ein zweiter mit dem Bearbeitungswerkzeug (10) getrieblich verbundener induktiver Geber (17) zur Erzeugung eines dem Weg bzw. der Geschwindigkeit des Bearbeitungswerkzeuges (10) entsprechenden Signals vorgesehen sind, daß zum Vergleich der beiden Signale und zur Einspeisung von Korrektursignalen eine Elektronik (18) vorgesehen ist und daß für die Steuerung des Antriebes der Bearbeitungswerkzeuge (10) eine das Ergebnissignal aus der Elektronik (18) aufnehmende Stelleinrichtung im Antrieb der Bearbeitungswerkzeuge (10) angeordnet ist.

2. Landwirtschaftliche Maschine nach Anspruch 1, dadurch gekennzeichnet, daß die beiden Geber (16, 17) Spannungsgeneratoren sind.

3. Landwirtschaftliche Maschine nach Anspruch 1, dadurch gekennzeichnet, daß die beiden Geber (16, 17) induktive Weggeber sind.

4. Landwirtschaftliche Maschine nach Anspruch 1, dadurch gekennzeichnet, daß die Elektronik (18) zur stufenlosen Verstellung bzw. Einstellung der
Korrektursignale ausgebildet ist.

5. Landwirtschaftliche Maschine nach Anspruch 1, dadurch gekennzeichnet, daß die Stelleinrichtung
stufenlos einstellbar ist.

6. Landwirtschaftliche Maschine nach Anspruch 5, dadurch gekennzeichnet, daß die Stelleinrichtung ein
Getriebe (14) ist.

7. Landwirtschaftliche Maschine nach Anspruch 5, dadurch gekennzeichnet, daß die Stelleinrichtung eine
Regelpunpe ist.

8. Landwirtschaftliche Maschine nach Anspruch 5, dadurch gekennzeichnet, daß die Stelleinrichtung ein
elektrischer Regelmotor ist.

9. Landwirtschaftliche Maschine nach Anspruch 1 und 4,
dadurch gekennzeichnet, daß die Elektronik (18) im
Bereich des Bedienungsplatzes (5) der landwirtschaftlichen Maschine (1) angeordnet ist.

Fig. 1

Fig. 2

Europäisches
Patentamt

**EUROPÄISCHER RECHERCHENBERICHT**

| | EINSCHLÄGIGE DOKUMENTE | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| X | US - A - 3 511 411 (WEISS) <br> * Spalte 2, Zeilen 35-72; Spalte 3; Spalte 4; Spalte 5; Spalte 6, Zeilen 1-59; Figuren 1-5 * <br> -- | 1,2,4, 5,7,8 | A 01 D 69/00 <br> A 01 D 33/12 |
| X | FR - A - 2 311 283 (ALLMAN) <br> * Seite 3, Zeilen 21-37; Seiten 4,5,6; Figuren 1,2 * <br> -- | 1,4,7, 9 | |
| X | FR - A - 2 338 747 (TECNOMA) <br> * Seite 1, Zeilen 38-40; Seite 2; Seite 3; Seite 4; Figur 1 * <br> -- | 1,2,4, 5,7 | RECHERCHIERTE SACHGEBIETE (Int. Cl.³) <br><br> A 01 D <br> A 01 C <br> A 01 M <br> B 05 E |
| | FR - A - 2 299 918 (TECNOMA) <br> * Seite 2, Zeilen 35-39; Seite 3; Seite 4; Figur 1 * <br> -- | 1,2,4, 5,7 | |
| | FR - A - 1 588 862 (DEERE & COMPANY) <br> * Seite 3, Zeilen 35-45; Seite 4; Seite 5; Seite 6; Seite 7; Seite 8; Figuren 1-10 * <br> -- | 1,3,4, 5 | |
| | US - A - 3 550 866 (SWENSON) <br> * Spalte 2, Zeilen 43-75; Spalte 3; Spalte 4; Spalte 5; Spalte 6, Zeilen 1-41; Figuren 1-4 * <br> ---- | 1,3,4, 5,8,9 | KATEGORIE DER GENANNTEN DOKUMENTE <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus anderen Gründen angeführtes Dokument <br> &: Mitglied der gleichen Patentfamilie, übereinstimmendes Dokument |

| Der vorliegende Recherchenbericht wurde für alle Patentansprüche erstellt | | |
|---|---|---|
| Recherchenort <br> Den Haag | Abschlußdatum der Recherche <br> 13-02-1980 | Prüfer <br> VERMANDER |

EPA form 1503.1  06.78